# EUROPEAN PATENT SPECIFICATION

(11) **EP 1 705 338 B1**
(45) Date of publication and mention of the grant of the patent: **13.05.2009**
(21) Application number: 06251109.2
(22) Date of filing: 01.03.2006
(51) Int. Cl.: F01D 5/00, B23K 28/02, B23K 9/04, B23K 26/34, B23K 1/00

(54) **Method for repairing parts composed of superalloys**
Verfahren zur Reparatur von Komponenten aus Superlegierungen
Méthode pour réparer des pièces en superalliages

(30) Priority: 11.03.2005 US 77677
(43) Date of publication of application: 27.09.2006
(73) Proprietor: United Technologies Corporation, Hartford, CT 06101 (US)
(72) Inventor: Lutz, Andrew J., Glastonburry, CT 06033 (US)
(74) Representative: Leckey, David Herbert

(56) References cited:
- EP-A- 1 312 437
- US-A- 5 193 736

## Description

The present application relates to a method for repairing parts, and more particularly, relates to a method for repairing parts composed of superalloys. EP 1312437 A1 discloses a prior art method for repairing cracks in gas turbine components comprising the steps of repairing cracks by brazing, detecting remaining cracks and repairing cracks by welding.

### BACKGROUND OF THE INVENTION

Superalloys are used for various components in gas turbine engines where the components are exposed to high temperatures and pressures for extended periods of time. A typical application is high pressure turbine vanes, where the temperature of the component can rise to about 2000°F (1093°C). Under these conditions, the component is expected to retain its shape and strength long enough to provide economical operation of the engine without unduly frequent service or replacement requirements.

Typically, superalloy components have been produced by precision casting, which provides a near-net shape component requiring only minimal machining operations to reach final configuration. To provide additional protection for the material from the high temperatures and corrosive environment due to combustion processes, a protective coating is commonly applied. Components with adequate properties for the desired applications have been successfully produced with no heat treatment other than the heating cycle incurred as part of the coating process, which is effectively a precipitation heat treatment of the as-cast material.

Frequently expensive gas turbine engine components, like superalloy turbine blades and vanes, are found with small defects resultant from the casting processes or develop small cracks during engine service. After extended service, some of these components may also incur damage, due to erosion, thermal mechanical fatigue-induced cracking caused by the frequent cycling between ambient and operating temperatures, or creep, which causes the airfoil portions of the turbine blades and vanes to bow or the platform portions of the component to twist away from their original positions, with a resultant change in the operational characteristics of the components. Although such defects may be relatively small, they are often sufficient to cause rejection of the component. In many instances, however, the defect is of such a nature that repairs would be satisfactory. However, lacking a suitable means for reliably repairing such defects, these components are often scrapped.

In an attempt to salvage such parts, many repair techniques have been attempted in the past. For example, although repair by fusion welding has occasionally been successful, its success tends to be sporadic, and the welding technique itself often produces additional cracking due to the typical high crack sensitivity of the cast superalloys.

Brazing procedures have also been utilized in attempts to repair defective turbine components. One method has been to simply flow molten brazing material into an existing crack. At times, oxides or other contaminants may yet still remain in the cracks due to tight or partially closed crevice areas which can prevent complete filling. In such cases, although the cracks may be sealed at the surface, no assurance can be provided that subsurface cracks will be sealed as well. This is, of course, not only detrimental but difficult to detect as well.

A more satisfactory approach to component repair is to first eliminate the cracks by mechanically routing out the entire defective area and then refilling it. However, when braze alloys are employed as the filler for such relatively large volumes; upon solidification they often form quantities of eutectic phases which are weak, brittle and prone to adverse selective oxidation during subsequent component service.

Although the desirability of effecting component repairs has long been evident, it is apparent that no satisfactory repair techniques exist, particularly where such repairs can be made reproducibly and reliably.

### SUMMARY OF THE INVENTION

A method for repairing parts is provided, as set forth in claim 1.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

FIG. 1 is a photograph depicting a routed area of a part ready to receive a repair material in the method of the present invention;
FIG. 2 is a photograph depicting a repair material being applied and welded to the routed area of the part of FIG. 1 in the method of the present invention;
FIG. 3 is a photograph depicting a repaired part undergoing a fluorescent penetration inspection in the method of the present invention; and
FIG. 4 is a photograph depicting the part of FIG. 1 after undergoing a brazing step.

Like reference numbers and designations in the various drawings indicate like elements.

### DETAILED DESCRIPTION

The method(s) for repairing a part comprising a superalloy are described herein. The method described herein combines both welding and brazing steps in order to effectively, reproducibly and reliably seal surface and subsurface defects while also removing oxides and other contaminants.

The method of the present invention generally comprises prepping a part having one or more defects in order to receive a repair material. The repair material is applied to the defect, and then welded. The welded repair material is blended to the contour of the part and inspected for additional defects. Upon finding additional defects in the part, a second repair material is applied and the defect and repair material are brazed. The second repair material is then blended to the contour of the part and inspected again for additional defects.

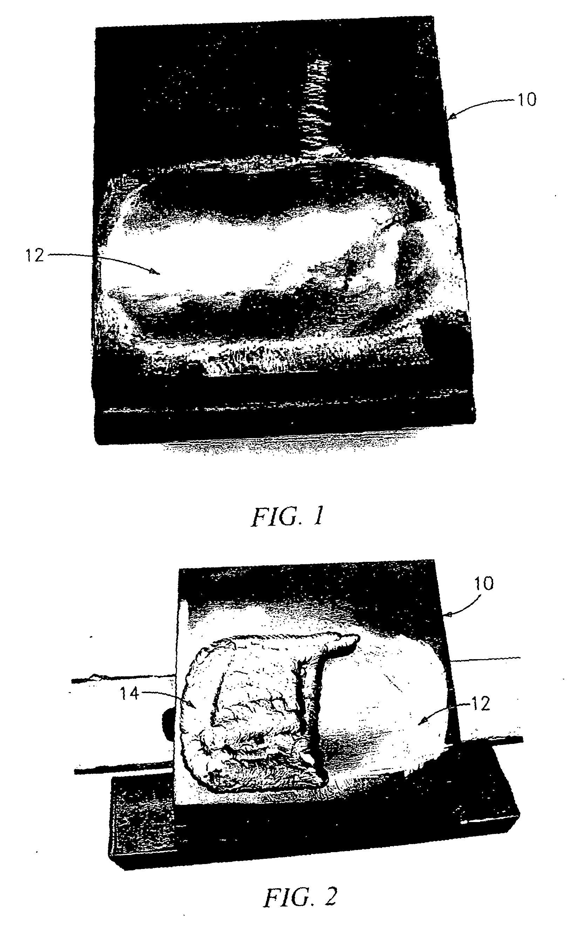

Referring generally now to FIGS. 1-4, the method for repairing parts comprising superalloys comprises preparing a first portion of the part to receive a repair material and undergo a welding process. Typically, a part 10 having a portion 12 exhibiting one or more structural defects such as erosion, thermal mechanical fatigue-induced cracking or microcracking, is routed out using methods known to one of ordinary skill in the art such that an amount of material sufficient to remove the crack and its surrounding area is removed as shown in the photograph of FIG. 1. The defect generally possesses a certain length, width and depth considered to be repairable rather than immediately scrapped. Preferably, while the length and depth of the defect are important considerations, a defect of any width in a part comprising a superalloy material is unacceptable and the part having said defect immediately becomes a candidate for repair. In carrying out the present method, the depth of the defect is measured to determine whether the defect may be fixed using welding or brazing. Welding a routed area containing repair material first as opposed to brazing the same routed area containing repair material first can prevent the disadvantages mentioned earlier such as incomplete filling, subsurface cracks and oxidation and effectively repair the part. Preferably, defects possessing a depth of greater than about 0.030 inches (0.76 mm) are fixed using the welding step. Those defects comprising a depth of greater than about 0.030 inches (0.76 mm) require welding and are then routed out as described above.

Upon determining the routing step removed the defect(s) from that portion, a repair material 14 is applied to fill at least the routed portion of the part as shown in the photograph of FIG. 2. Preferably, the amount of repair material applied is sufficient to fill the routed portion and leave extra repair material in and around the localized area. For example, the amount of repair material may comprise enough material to fill and overflow a surface defect having a depth of about 0.10 inch (2.54 mm). The repair material may be applied using any conventional method known to one of ordinary skill in the arts including but not limited to beading. This first repair material may comprise any nickel-based alloy such as IN-939® commercially available from INCO (originally the International Nickel Corporation), of Wexford, Pennsylvania; C263® commercially available from MM Aerospace Metals Inc., of Fort Lauderdale, Florida; similar alloys containing nickel, other related superalloys containing nickel, and combinations comprising at least one of the foregoing nickel-based alloys. Preferably, the first repair material comprises C623® nickel alloy.

Once the first repair material is applied to the routed portion and surrounding area, the material is welded using a welding method known to one of ordinary skill in the art. Preferably, a gas tungsten arc welding method or laser welding method under inert atmospheric conditions is utilized. The weld formed encompasses the filled in routed portion along with the area surrounding the welded portion. The welded portion and surrounding area is then blended to the contour of the part. The contour of the part generally constitutes the shape and features originally present. Blending the welded portion may be accomplished using any method known to one of ordinary skill in the art including but not limited to milling, grinding, sanding, super-abrasive machining, and combinations comprising at least one of the foregoing methods. Preferably, the welded area is blended by manually grinding or super-abrasive machining the area until the welded portion and surrounding area conform to the contour of the part. In the alternative, a preform may be utilized in order to accurately restore the welded portion and surrounding area to the original contour of the part. The preform may be applied to the surface of the part including the welded portion prior to blending the welded portion and surrounding area.

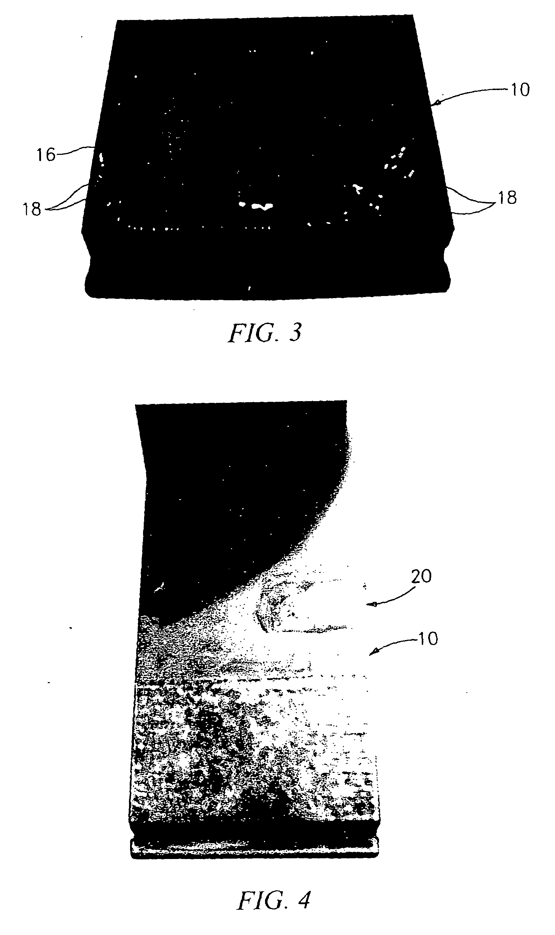

Upon completing the welding and blending steps, the part is inspected to determine whether any cracks, subsurface cracks and/or microcracks still remain in the areas where the first repair material was welded and blended. Preferably, a fluorescent penetration inspection of the part is performed as is known to one of ordinary skill in the art as shown in the photograph of FIG. 3. At this time, those defects possessing a depth of less than 0.030 inches (0.76 mm) may be mapped out. Mapping typically requires manually marking defects 16 by, for example, circling 18, while the part is illuminated fluorescently. Once the defects have been mapped, the part is prepared to be brazed.

As described earlier, the second portions of the part having defects comprising a depth of less than 0.030 inches (0.76 mm) are routed. Once routed, the part may be cleaned by any method known to one of ordinary skill in the art. Preferably, the part is submersed in a hydrogen fluoride bath to remove contaminants and prevent oxidation from occurring in the routed second portions of the part. After being cleaned, a second repair material is applied to the second routed portions of the part. Preferably, the amount of second repair material applied is sufficient to fill the routed second portion and leave extra repair material in and around the localized area. For example, the amount of repair material may comprise enough material to fill and overflow a surface defect having a depth of about 0.10 inch (2.54 mm). The repair material may be applied using any conventional methods known to one of ordinary skill in the art. This second repair material may comprise any nickel-based alloy, and preferably comprises Turbofix^{®} braze repair formula, a transient liquid phase bonding alloy ("TLP"), as described in United States Patent No. 4,008,844 to Duvall, assigned to United Technologies Corporation, and incorporated by reference herein in its entirety.

For repair of the superalloys, preferably the TLP alloy is employed in the form of homogenous powder. This powder comprises an alloy substantially corresponding in composition to at least the major constituents of the substrate material, excluding therefrom any elements known to form deleterious phases which may interfere with character of the finished repair area, and typically containing 1-3 percent boron, as the temperature depressant element. This TLP powder is thoroughly blended with the correct proportion of homogeneous metal powder of the substrate material composition, forming the filler powder mix. Substrate powder/TLP powder ratios of 2-9/1 have been used. This filler powder mix is placed in the void to be filled and the component is heated to the bonding temperature. When the TLP powder melts, it wets and flows around the base metal powder particles and throughout the repair area, completely filling it. The remaining, unmelted substrate powders assist and accelerate the isothermal solidification by acting, as previously described, as local diffusion sinks for the melting point depressant (e.g. boron) in the TLP alloy. Once the repair area has completely solidified, the substrate metal powders further aid in subsequent homogenization by providing short-range distances for mutual diffusion between materials of the TLP and substrate metal compositions.

Preferably, the second repair material comprises a Turbofix® braze repair formula comprises a nickel-based powder in an amount of about fifty percent by weight of the material and a bonding alloy in an amount of about fifty percent by weight of the material. The nickel-based powder is preferably INI-939 powder, and the bonding alloy is preferably PWA 1180 powder. At the completion of the homogenization cycle, the surface of the part may be restored by blending the brazed portion 20 to the desired or original contour as shown in FIG. 4. As described earlier herein, blending the brazed portion may be accomplished using any method known to one of ordinary skill in the art including but not limited to milling, grinding, sanding, super-abrasive machining, and combinations comprising at least one of the foregoing methods, and preferably by manually grinding or super-abrasive machining the area until the welded portion and surrounding area conform to the desired or original contour. In the alternative, a preform may be utilized prior to blending the brazed area.

Upon completing the brazing step as shown in the photograph of FIG. 4, the part may again be inspected to determine whether any cracks, subsurface cracks and/or microcracks still remain in the areas where the second repair material was brazed and blended. As described herein earlier, a fluorescent penetration inspection of the part is performed to ensure no other surface defects remain. Generally, surface defects still present and possessing a depth of greater than one-eighth of the wall thickness of the area of the part will cause the part to be scrapped. However, the combination of welding and brazing the original surface defects present as described herein is intended to cure such potentially lingering surface defects.

It is to be understood that the invention is not limited to the illustrations described and shown herein, which are deemed to be merely illustrative of the best modes of carrying out the invention, and which are susceptible to modification of form, size, arrangement of parts, and details of operation. The invention rather is intended to encompass all such modifications which are within its scope as defined by the claims.

## Claims

1. A method for repairing parts (10), comprising:
applying a first repair material (14) in an amount sufficient to fill at least a first portion (12) of a part (10);
welding said first repair material (14) in said portion (12) of said part (10);
blending said first repair material (14) with a contour of said part (10);
inspecting said part (10);
brazing a second repair material in a second portion of said part (10) wherein said second portion has been welded and blended;
blending said second repair material with said contour of said part (10); and
inspecting said part (10).

2. The method of claim 1, wherein said first portion (12) comprises a depleted area having a depth of greater than about 0.030 inches (0.76 mm).

3. The method of claim 1 or 2, wherein said first repair material (14) comprises a nickel-based alloy.

4. The method of claim 1, 2 or 3, wherein said first portion (12) comprises one or more surface defects.

5. The method of any preceding claim, wherein said welding step comprises gas tungsten arc welding or laser welding.

6. The method of any preceding claim, wherein said blending said first repair material (14) comprises a method selected from the group consisting of milling, grinding, sanding, super-abrasive machining, and combinations comprising at least one of the foregoing methods.

7. The method of any preceding claim, further comprising applying a preform to match said contour of said part (10) prior to blending said first repair material (14).

8. The method of any preceding claim, wherein said brazing step comprises the following steps:
cleaning said part (10);
applying said second repair material in an amount sufficient to fill at least said second portion of said part (10); and
brazing said second repair material in said second portion of said part (10).

9. The method of claim 8, wherein said cleaning step comprises placing said part (10) in a bath comprising hydrogen fluoride.

10. The method of any preceding claim, wherein said second repair material comprises a nickel-based powder in an amount of about fifty percent by weight of said material and a bonding alloy in an amount of about fifty percent by weight of said material.

11. The method of any preceding claim, wherein said second portion comprises a depleted area having a depth of no more than about 0.030 inches (0.76 mm).

12. The method of any preceding claim, wherein said blending said second repair material comprises a method selected from the group consisting of milling, grinding, sanding, super-abrasive machining, and combinations comprising at least one of the foregoing methods.

13. The method of any preceding claim, further comprising applying a preform to match said contour of said part (10) prior to blending said second repair material.

14. The method of any preceding claim, wherein said first inspection step comprises the steps of:
performing a fluorescent penetration inspection of at least said at least first portion (12) of said part (10); and
mapping at least said at least first portion (12) of said part (10) to be repaired.

15. The method of claim 14, wherein said mapping step comprises visually inspecting at least said first portion (12) and marking one or more surface defects (16) of said second portion.

16. The method of any preceding claim, wherein said second inspection step comprises the steps of:
performing a fluorescent penetration inspection of at least said at least second portion of said part (10); and
mapping at least said at least second portion of said part (10).

17. The method of claim 16, wherein said mapping step comprises visually inspecting at least said second portion and marking one or more surface defects said second portion.

18. The method of any preceding claim, further comprising prior to said application steps preparing said first portion (12) to receive said first repair material (14) and said second portion to receive said second repair material.

## Patentansprüche

1. Verfahren zum Ausbessern von Teilen (10), aufweisend:
Anbringen eines ersten Reparaturmaterials (14) in einer Menge, die ausreicht, um mindestens einen ersten Bereich (12) eines Teils (10) zu füllen;
Verschweißen des ersten Reparaturmaterials (14) in dem Bereich (12) des Teils (10);
Angleichen des ersten Reparaturmaterials (14) an einen Umriss des Teils (10);
Prüfen des Teils (10);
Hartlöten eines zweiten Reparaturmaterials in einem zweiten Bereich des Teils (10), wobei der zweite Bereich verschweißt und angeglichen wurde;
Angleichen des zweiten Reparaturmaterials an den Umriss des Teils (10); und Prüfen des Teils (10).

2. Verfahren nach Anspruch 1, bei dem der erste Bereich (12) einen Leerraum mit einer Tiefe von größer als etwa 0,030 Zoll (0,76 mm) aufweist.

3. Verfahren nach Anspruch 1 oder 2, bei dem das erste Reparaturmaterial (14) eine Legierung auf Nickelbasis aufweist.

4. Verfahren nach Anspruch 1, 2 oder 3, bei dem der erste Bereich (12) einen oder mehrere Oberflächendefekte aufweist.

5. Verfahren nach irgendeinem vorangehenden Anspruch, bei dem der Verschwcißungsschritt Wolframgas-Bogenschweißen oder Laserschweißen umfasst.

6. Verfahren nach irgendeinem vorangehenden Anspruch, bei dem das Angleichen des ersten Reparaturmaterials (14) ein Verfahren aufweist, das ausgewählt wird aus der Gruppe, die aus Schmirgeln, Schleifen, Sandstrahlen, superabrasivem Bearbeiten und Kombinationen, die mindestens eines der vorangehenden Verfahren umfassen, besteht.

7. Verfahren nach irgendeinem vorangehenden Anspruch, außerdem aufweisend ein Anbringen einer Vorform, die den Umriss des Teils (10) nachstellt, vor dem Angleichen des ersten Reparaturmaterials (14).

8. Verfahren nach irgendeinem vorangehenden Anspruch, bei dem der Schritt des Hartlötens die folgenden Schritte aufweist:
Reinigen des Teils (10);
Anbringen des zweiten Reparatumiaterials in einer Menge, die ausreichend ist, um mindestens den zweiten Bereich des Teils (10) zu füllen; und
Hartlöten des zweiten Reparaturmaterials in dem zweiten Bereich des Teils (10).

9. Verfahren nach Anspruch 8, bei dem der Reinigungsschritt ein Platzieren des Teils (10) in einem Bad, das Fluorwasserstoff aufweist, aufweist.

10. Verfahren nach irgendeinem vorangehenden Anspruch, bei dem das zweite Reparaturmaterial ein Pulver auf Nickelbasis in einer Menge von etwa 50 Gew-% des Materials und eine Verbindungslegierung in einer Menge von etwa 50 Gew-% des Materials aufweist.

11. Verfahren nach irgendeinem vorangehenden Anspruch, bei dem der zweite Bereich einen Leerraum mit einer Tiefe von nicht mehr als etwa 0,030 Zoll (0,76 mm) aufweist.

12. Verfahren nach irgendeinem vorangehenden Anspruch, bei dem das Angleichen des zweiten Reparaturmaterials ein Verfahren aufweist, das ausgewählt wird aus der Gruppe, die aus Schmirgeln, Schleifen, Sandstrahlen, superabrasivem Bearbeiten und Kombinationen, die mindestens eines der vorangehenden Verfahren umfassen, besteht.

13. Verfahren nach irgendeinem vorangehenden Anspruch, außerdem aufweisend ein Anbringen einer Vorform, die den Umriss des Teils (10) nachstellt, vor dem Angleichen des zweiten Reparaturmaterials.

14. Verfahren nach irgendeinem vorangehenden Anspruch, bei dem der erste Prüfschritt folgende Schritte aufweist:
Durchführen einer Fluoreszenzeindringprüfung mindestens an dem mindestens ersten Bereich (12) des Teils (10); und
Kennzeichnen mindestens des mindestens ersten Bereichs (12) des auszubessernden Teils (10).

15. Verfahren nach Anspruch 14, bei dem der Kennzeichnungsschritt ein visuell Prüfen mindestens des ersten Bereichs (12) und ein Markieren eines oder mehrerer Oberflächendefekte (16) des zweiten Bereichs aufweist.

16. Verfahren nach irgendeinem vorangehenden Anspruch, bei dem der zweite Prüfschritt folgende Schritte aufweist:
Durchführen einer Fluoreszenzeindringprüfung mindestens an dem mindestens zweiten Bereich des Teils (10); und
Kennzeichnen mindestens des mindestens zweiten Bereichs des Teils (10).

17. Verfahren nach Anspruch 16, bei dem der Kennzeichnungsschritt ein visuell Prüfen mindestens des zweiten Bereichs und ein Markieren eines oder mehrerer Oberflächendefekte des zweiten Bereichs aufweist.

18. Verfahren nach irgendeinem vorangehenden Anspruch, außerdem aufweisend, vor den Anbringungsschritten, ein Vorbereiten des ersten Bereichs (12) zur Aufnahme des ersten Reparaturmaterials (14) und des zweiten Bereichs zur Aufnahme des zweiten Reparaturmaterials.

## Revendications

1. Procédé de réparation de pièces (10), comprenant les étapes qui consistent à :
appliquer une quantité d'un premier matériau de réparation (14) suffisante pour remplir au moins une première partie (12) d'une pièce (10),
souder ledit premier matériau de réparation (14) dans ladite partie (12) de ladite pièce (10),
ajuster ledit premier matériau de réparation (14) par rapport à un contour de ladite pièce (10),
inspecter ladite pièce (10),
braser un deuxième matériau de réparation dans une deuxième partie de ladite pièce (10), ladite deuxième partie ayant été soudée et ajustée,
ajuster ledit deuxième matériau de réparation par rapport audit contour de ladite pièce (10) et
inspecter ladite pièce (10).

2. Procédé selon la revendication 1, dans lequel ladite première partie (12) comprend une zone appauvrie dont la profondeur est supérieure à environ 0,76 mm (0,030 pouce).

3. Procédé selon les revendications 1 ou 2, dans lequel ledit premier matériau de réparation (14) comprend un alliage à base de nickel.

4. Procédé selon les revendications 1, 2 ou 3, dans lequel ladite première partie (12) comprend un ou plusieurs défauts de surface.

5. Procédé selon l'une quelconque des revendications précédentes, dans lequel ladite étape de soudage comprend un soudage à arc au gaz de tungstène ou un soudage au laser.

6. Procédé selon l'une quelconque des revendications précédentes, dans lequel ledit ajustement dudit premier matériau de réparation (14) comprend un procédé sélectionné dans l'ensemble constitué du fraisage, du meulage, du sablage, de l'usinage super abrasif et des combinaisons qui comprennent au moins un des procédés susmentionnés.

7. Procédé selon l'une quelconque des revendications précédentes, comprenant de plus l'action qui consiste à appliquer une ébauche qui correspond audit contour de ladite pièce (10) avant d'ajuster ledit premier matériau de réparation (14).

8. Procédé selon l'une quelconque des revendications précédentes, dans lequel ladite étape de brasage comprend les étapes qui consiste à :
nettoyer ladite pièce (10),
appliquer une quantité dudit deuxième matériau de réparation suffisante pour remplir au moins ladite deuxième partie de ladite pièce (10) et
braser ledit deuxième matériau de réparation dans ladite deuxième partie de ladite pièce (10).

9. Procédé selon la revendication 8, dans lequel ladite étape de nettoyage comprend l'action qui consiste à placer ladite pièce (10) dans un bain contenant du fluorure d'hydrogène.

10. Procédé selon l'une quelconque des revendications précédentes, dans lequel ledit deuxième matériau de réparation contient une poudre à base de nickel à un niveau d'environ cinquante pour cent en poids par rapport audit matériau et un alliage de liaison à un niveau d'environ cinquante pour cent en poids par rapport audit matériau.

11. Procédé selon l'une quelconque des revendications précédentes, dans lequel ladite deuxième partie présente une zone appauvrie dont la profondeur est inférieure à environ 0,76 mm (0,030 pouce).

12. Procédé selon l'une quelconque des revendications précédentes, dans lequel ledit ajustement dudit deuxième matériau de réparation comprend un procédé sélectionné parmi l'ensemble constitué du fraisage, du meulage, du sablage, de l'usinage super abrasif et des combinaisons qui comprennent au moins un des procédés susmentionnés.

13. Procédé selon l'une quelconque des revendications précédentes, comprenant de plus l'action qui consiste à appliquer une ébauche qui correspond audit contour de ladite pièce (10) avant d'ajuster ledit deuxième matériau de réparation.

14. Procédé selon l'une quelconque des revendications précédentes, dans lequel ladite première étape d'inspection comprend les étapes qui consistent à :
réaliser une inspection par pénétration fluorescente d'au moins ladite ou desdites premières parties (12) de ladite pièce (10) et
cartographier au moins ladite ou lesdites premières parties (12) de ladite pièce (10) qui doit être réparée.

15. Procédé selon la revendication 14, dans lequel ladite étape de cartographie comprend une inspection visuelle d'au moins ladite première partie (12) et le repérage d'au moins un défaut (16) de surface de ladite deuxième partie.

16. Procédé selon l'une quelconque des revendications précédentes, dans lequel ladite deuxième étape d'inspection comprend les étapes qui consiste à :
réaliser une inspection par pénétration fluorescente d'au moins ladite ou desdites deuxièmes parties de ladite pièce (10) et
cartographier au moins ladite ou lesdites deuxièmes parties de ladite pièce (10).

17. Procédé selon la revendication 16, dans lequel ladite étape de cartographie comprend une inspection visuelle d'au moins ladite deuxième partie et le repérage d'au moins un défaut de surface de ladite deuxième partie.

18. Procédé selon l'une quelconque des revendications précédentes, comprenant de plus, antérieurement auxdites étapes d'application, l'étape qui consiste à préparer ladite première partie (12) pour qu'elle puisse recevoir ledit premier matériau de réparation (14) et ladite deuxième partie pour qu'elle puisse recevoir ledit deuxième matériau de réparation.
